# FASCICULE DE BREVET EUROPEEN

(11) **EP 2 809 140 B1**
(45) Date de publication et mention de la délivrance du brevet: **14.09.2016**
(21) Numéro de dépôt: 13704384.0
(22) Date de dépôt: 01.02.2013
(51) Int. Cl.: A01G 1/00, A01G 9/02

(54) **SYSTEME POUR FORMER UN ELEMENT TEXTILE VEGETALISE**
SYSTEM ZUR HERSTELLUNG EINER BEPFLANZEN STOFFMATTE
SYSTEM FOR FORMING A TEXTILE PLANTED MAT

(30) Priorité: 02.02.2012 BE 201200063
(43) Date de publication de la demande: 10.12.2014
(73) Titulaire: Vertical Ecosystem Sprl, 5030 Gembloux (BE)
(72) Inventeur: VANDERBECKEN, Vincent, André, B-5030 Lonzée (BE); SPEHAR, Christophe, B-7090 Ronquières (BE); BLANGILLE, Thomas, Stéphan, J., B-1050 Ixelles (BE)
(74) Mandataire: Gevers Patents
(86) Numéro de dépôt international: PCT/EP2013/052050
(87) Numéro de publication internationale: WO 2013/113884

(56) Documents cités:
- CN-U- 201 947 623
- FR-A1- 2 634 971
- JP-A- 2007 195 481

## Description

La présente invention se rapporte à un système pour former un élément textile végétalisé comprenant une première couche imperméable présentant une face dorsale et une face frontale, une deuxième couche comprenant un feutre synthétique doté d'un pouvoir de rétention d'eau et présentant une face dorsale et une face frontale, ladite face dorsale de ladite deuxième couche faisant face à ladite face frontale de ladite première couche imperméable et une troisième couche de polymère synthétique présentant des ouvertures ainsi qu'une face dorsale et une face frontale, ladite face dorsale de ladite troisième couche faisant face à ladite face frontale de ladite seconde couche comprenant un feutre synthétique.

Un tel système est connu par exemple du document FR2747265 qui décrit un dispositif pour la culture sans sol de plantes sur une surface sensiblement verticale. Ce dispositif comprend une toile imperméable, un feutre imputrescible, une paroi de protection sensiblement verticale avec des ouvertures et une couche de végétation implantée. Un tel système est destiné à être exclusivement placé contre une paroi rigide sensiblement verticale qui sert de support au mur végétal.

Le brevet FR2634971 décrit un dispositif pour la culture sans sol des plantes sur une surface verticale. Ce dispositif est constitué de trois éléments : un panneau vertical rigide, un feutre synthétique recouvrant ce panneau et un bac de récupération d'eau, le système n'étant pas étanche. Il est prévu, selon ce document, que le feutre soit fixé au panneau à l'aide d'agrafes ou par collage.

D'autres documents tels que les documents FR2902283, FR2906822 et WO2011/095570 concernent également des systèmes de mur végétal prévus pour être disposés contre des parois verticales et constitués d'une pluralité d'éléments tels que des bacs, des compartiments ou des éléments modulaires accrochés à des structures rigides et fixes. Les systèmes décrits dans ces trois documents ne reposent plus sur l'utilisation d'un feutre synthétique pour répondre aux besoins hydriques des végétaux implantés mais sur l'utilisation de substrats placés dans les bacs ou les compartiments.

Malheureusement, de tels systèmes ne permettent la mise en place d'un mur végétal que sur des surfaces verticales rigides servant de support à l'ensemble du système. De plus, les systèmes décrits dans l'état de la technique souffrent de problèmes d'étanchéité, les différents éléments étant fixés entre eux par agrafage ou par collage.

L'invention a pour but de pallier les inconvénients de l'état de la technique en procurant un système pour former un élément textile végétalisé ne nécessitant pas de surface rigide et positionnable sur tout type de surface verticale ou inclinée, plane ou courbe, concave ou convexe, et adaptable à des structures portantes, en assurant et en sécurisant l'implantation racinaire et en assurant l'étanchéité par soudure étanche de l'ensemble du système..

Par les termes « élément textile végétalisé », on entend au sens de la présente invention, un complexe multicouche souple végétalisé permettant la création d'une architecture textile végétalisée, c'est-à-dire supportant des végétaux, et pouvant se présenter, par exemple, sous forme d'un mur végétal ou sous forme de toute surface plane ou inclinée, concave ou convexe et présentant ou non des creux et/ou des reliefs.

Par les termes « soudure étanche », on entend au sens de la présente invention, une soudure agencée pour préserver l'étanchéité de ladite première couche imperméable.

Ainsi, pour résoudre ces problèmes, il est prévu suivant l'invention, un système pour former un élément textile végétalisé tel qu'indiqué au début caractérisé en ce que ladite première couche imperméable est une toile souple en polymère présentant une densité comprise entre 300 et 1200 g/m², de préférence entre 500 et 1000 g/m², préférentiellement entre 600 et 800 g/m² et en ce que ladite troisième couche est une grille en polymère souple, lesdites première et troisième couches étant soudées entre elles sur leur pourtour afin d'assurer l'étanchéité dudit système pour former un élément textile végétalisé, ladite soudure étanche étant compatible avec les matériaux utilisés pour former les différentes couches.

L'utilisation d'une première couche de toile en polymère souple imperméable permet la mise en place d'éléments textiles végétalisés sur tout type de surface, la souplesse de ladite toile permettant d'adapter la colonisation végétale aux creux et aux reliefs des surfaces à couvrir ou de former des surfaces tendues planes ou courbes, concaves ou convexes, sur des structures auto-portantes ou sur des structures fixées aux surfaces à couvrir. La présence d'une grille en polymère souple sous la couche de végétation implantée permet un enracinement correct et sécurisé de chacune des plantes, les racines et les radicelles desdites plantes passant sous ladite grille et pouvant s'entremêler aux mailles de polymère constituant la grille. D'autre part, la soudure étanche entre la première couche imperméable en polymère souple et la couche formée par une grille en polymère souple permet d'obtenir un système pour former un élément textile végétalisé totalement étanche car ce type de soudure permet d'éviter toute perforation de la couche imperméable, ce qui permet d'éviter tout passage d'eau d'une face à l'autre de ladite première couche imperméable. Par rapport aux systèmes de mur végétal connus, le système pour former un élément textile végétalisé totalement étanche selon la présente invention résout également les problèmes d'humidité observés sur les parois verticales contre lesquelles sont apposés les murs végétaux.

Selon un mode de réalisation particulier, ladite deuxième couche est formée par l'intégration de ladite grille en polymère souple dans ledit feutre synthétique doté d'un pouvoir de rétention d'eau, une soudure étanche étant réalisée entre ladite première couche imperméable et cette deuxième couche comprenant un feutre synthétique qui intègre ladite grille en polymère.

Avantageusement, le système pour former un élément textile végétalisé selon la présente invention comprend en outre une quatrième couche comprenant un substrat d'enracinement compatible avec la culture hors-sol et présentant une face dorsale et une face frontale, ladite face dorsale de ladite quatrième couche faisant face à ladite face frontale de ladite troisième couche ou faisant face à ladite face frontale de ladite deuxième couche, ladite face frontale de ladite quatrième couche faisant alors face à ladite face dorsale de ladite troisième couche. Ce substrat contribue à un enracinement correct des végétaux implantés et aux apports hydriques et minéraux nécessaires à une croissance correcte des végétaux .

Dans une forme de réalisation particulière, le système pour former un élément textile végétalisé selon la présente invention comprend en outre une cinquième couche de végétation implantée présentant une face dorsale et une face frontale, ladite face dorsale de ladite cinquième couche faisant face à ladite face frontale de ladite troisième couche et éventuellement à ladite face frontale de ladite quatrième couche lorsqu'elle est présente.

Dans une autre forme de réalisation particulière, le système pour former un élément textile végétalisé selon la présente invention comprend en outre une sixième couche formée par une grille en polymère souple agencée pour retenir des végétaux et/ou leurs racines, présentant une face dorsale et une face frontale, ladite face dorsale de ladite sixième couche faisant face à ladite face frontale de ladite troisième couche et éventuellement à ladite face frontale de ladite quatrième couche lorsqu'elle est présente ainsi qu'éventuellement à ladite face frontale de ladite cinquième couche lorsqu'elle est présente et étant soudée au moins à ladite première couche sur son pourtour par une soudure étanche assurant l'étanchéité dudit système pour former un élément textile végétalisé, ladite soudure étanche étant compatible avec les matériaux utilisés pour former les différentes couches. Avantageusement, cette sixième couche formée par une grille en polymère souple permet la fixation de la végétation implantée ainsi que le maintien des couches inférieures grâce à sa soudure étanche à au moins ladite première couche imperméable en polymère souple. La fixation de la végétation est essentielle lorsque le système pour former un élément textile végétalisé couvre des surfaces inclinées afin d'éviter toute chute de plants.

Dans une forme de réalisation particulièrement avantageuse, le système pour former un élément textile végétalisé selon la présente invention comprend également une septième couche comprenant un feutre synthétique doté d'un pouvoir de rétention d'eau et présentant une face dorsale et une face frontale, ladite face dorsale de ladite première couche imperméable faisant face à ladite face frontale de ladite septième couche et une huitième couche de polymère synthétique présentant des ouvertures ainsi qu'une face dorsale et une face frontale, ladite face dorsale de ladite septième couche faisant face à ladite face frontale de ladite huitième couche. Cette réalisation selon l'invention permet la mise en place d'un élément textile végétalisé double face où deux couches de végétation implantée sont disposées de part et d'autre d'une couche imperméable centrale. Ce mode de réalisation est particulièrement indiqué pour la mise en place de cloisons ou de haies artificielles végétalisées.

Avantageusement, le système pour former un élément textile végétalisé selon la présente invention comprend en outre une neuvième couche comprenant un substrat d'enracinement compatible avec la culture hors-sol et présentant une face dorsale et une face frontale, ladite face frontale de ladite neuvième couche faisant face à ladite face dorsale de ladite huitième couche.

Avantageusement, le système pour former un élément textile végétalisé selon la présente invention comprend en outre une dixième couche de végétation implantée présentant une face dorsale et une face frontale, ladite face frontale de ladite dixième couche faisant face à ladite face dorsale de ladite huitième couche et éventuellement à ladite face dorsale de ladite neuvième couche lorsqu'elle est présente.

De façon tout aussi avantageuse, le système pour former un élément textile végétalisé selon la présente invention comprend en outre une onzième couche formée par une grille en polymère souple agencée pour retenir des végétaux et/ou leurs racines et présentant une face dorsale et une face frontale, ladite face frontale de ladite onzième couche faisant face à ladite face dorsale de ladite huitième couche et éventuellement à ladite face dorsale de ladite neuvième couche lorsqu'elle est présente ainsi qu'éventuellement à ladite face dorsale de la dixième couche, lorsqu'elle est présente et étant soudée au moins à ladite première couche sur son pourtour par une soudure étanche assurant l'étanchéité dudit système pour former un élément textile végétalisé, ladite soudure étanche étant compatible avec les matériaux utilisés pour former les différentes couches.

Avantageusement, selon la présente invention, ladite cinquième couche et/ou ladite dixième couche de végétation implantée est une couche comprenant des semences. La mise en place de la végétation implantée sous forme de semences offre l'avantage d'être rapide puisque les semences, préalablement enrobées avec une substance collante peuvent être directement pulvérisées sur le système pour former un élément textile végétalisé, avant ou après la mise en place de ce dernier.

De préférence, selon la présente invention, ladite cinquième couche et/ou ladite dixième couche de végétation implantée est une couche de plantes bouturées. Cette forme de réalisation permet le placement d'éléments textiles végétalisés où des plantes sont déjà visibles, ce qui permet de bénéficier directement de la végétation supportée par le système pour former un élément textile végétalisé .

De préférence, selon la présente invention, ladite cinquième couche et/ou ladite dixième couche de végétation implantée est une couche de mini-mottes enracinées. Comme précédemment, cette forme de réalisation permet le placement d'éléments textiles végétalisés comprenant déjà des plantes visibles, ce qui permet de bénéficier directement de la végétation supportée par le système pour former un élément textile végétalisé.

De préférence, selon la présente invention, ladite cinquième couche et/ou ladite dixième couche de végétation implantée est une couche comprenant du papier ensemencé. Le papier ensemencé est avantageux puisqu'il permet un placement facile et rapide de la couche de végétation en assurant le maintien des semences.

Avantageusement, ledit substrat d'enracinement des quatrième et/ou neuvième couches est choisi dans le groupe constitué des fibres en polyester, de la mousse de polyuréthane hydrophile, de la laine de roche, de la laine de verre, des fibres de noix de coco, des sphaignes et, de manière générale, tout matériau pouvant constituer un substrat de culture hors-sol. Ce substrat d'enracinement contribue à un enracinement correct des végétaux implantés au niveau de ladite quatrième couche et assurent également une rétention en eau au niveau des racines et des radicelles, ce qui favorise la croissance des végétaux et contribue à minimiser les apports en eau par irrigation ou arrosage.

De préférence, le système pour former un élément textile végétalisé selon la présente invention peut comprendre en outre un système d'irrigation ou d'arrosage et éventuellement une gouttière de récupération. Un tel système d'irrigation ou d'arrosage éventuellement automatisé permet de réaliser, périodiquement, des apports en eau et/ou en solution nutritives comprenant notamment des minéraux et des oligo-éléments favorisant la croissance et le maintien de la végétation implantée. L'arrosage peut être réalisé, par exemple, par l'intermédiaire d'un système de goutte à goutte ou par l'intermédiaire d'asperseurs.

Avantageusement, selon la présente invention, les différentes couches dudit système pour former un élément textile végétalisé sont en polymère souple, par exemple en PVC et/ou en PEHD et/ou en polyester enduit PVC.

D'autres formes de réalisation d'un système pour former un élément textile végétalisé suivant l'invention sont indiquées dans les revendications annexées.

L'invention a aussi pour objet un procédé de fabrication d'un système pour former un élément textile végétalisé comprenant
- une étape de superposition d'une deuxième couche comprenant un feutre synthétique doté d'un pouvoir de rétention d'eau et présentant une face frontale et une face dorsale sur une première couche imperméable présentant une face frontale et une face dorsale, ladite face dorsale de ladite deuxième couche faisant face à ladite face frontale de ladite première couche,
- une étape de superposition d'une troisième couche de polymère synthétique présentant des ouvertures ainsi qu'une face frontale et une face dorsale sur ladite deuxième couche, ladite face dorsale de ladite troisième couche faisant face à la face frontale de ladite deuxième couche, et
- une étape de soudure étanche sur les pourtours desdites première et troisième couches, ladite soudure étanche assurant l'étanchéité dudit système pour former un élément textile végétalisé, ladite soudure étanche étant en outre compatible avec les matériaux utilisés pour former les différentes couches.

Les procédés connus de l'état de la technique et tels que décrits dans les documents FR2747265 et FR2634971 n'assurent pas l'étanchéité du système de mur végétal puisque les différentes couches sont fixées entre elles par agrafage ou par collage. Ces modes de fixation favorisent les fuites d'eau et les entrées d'air, les agrafes créant des trous dans chacune des couches et le collage n'assurant pas une étanchéité parfaite et durable.

Pour résoudre ce problème, il est proposé selon l'invention un procédé de fabrication d'un système pour former un élément textile végétalisé comprenant une étape de soudure étanche sur les pourtours desdites première et troisième couches, ladite soudure étanche assurant l'étanchéité dudit système pour former un élément textile végétalisé, ladite soudure étanche étant en outre compatible avec les matériaux utilisés pour former les différentes couches. Ce type de soudure permet de fusionner les différentes couches sur l'ensemble de leur pourtour sans créer la moindre ouverture, ce qui assure une étanchéité complète du système pour former un élément textile végétalisé.

Avantageusement, le procédé de fabrication d'un système pour former un élément textile végétalisé selon la présente invention comprend une étape de superposition d'une quatrième couche comprenant un substrat d'enracinement compatible avec la culture hors-sol et présentant une face frontale et une face dorsale sur ladite troisième couche, ladite face dorsale de ladite quatrième couche faisant face à ladite face frontale de ladite troisième couche.

Avantageusement, le procédé de fabrication d'un système pour former un élément textile végétalisé selon la présente invention comprend une étape de superposition d'une cinquième couche de végétation implantée présentant une face frontale et une face dorsale sur ladite troisième couche, ladite face dorsale de ladite cinquième couche faisant face à ladite face frontale de ladite troisième couche et éventuellement à ladite face frontale de ladite quatrième couche lorsqu'elle est présente.

De façon tout aussi avantageuse, le procédé de fabrication d'un système pour former un élément textile végétalisé selon la présente invention comprend une étape de superposition d'une sixième couche formée par une grille en polymère souple agencée pour retenir des végétaux et/ou leurs racines et présentant une face frontale et une face dorsale sur ladite troisième couche, ladite face dorsale de ladite sixième couche faisant face à ladite face frontale de ladite troisième couche et éventuellement à ladite face frontale de ladite quatrième couche lorsqu'elle est présente ainsi qu'éventuellement à ladite face frontale de ladite cinquième couche lorsqu'elle est présente et étant soudée au moins à ladite première couche sur son pourtour par soudure étanche, ladite soudure étanche assurant l'étanchéité dudit système pour former un élément textile végétalisé, ladite soudure étanche étant en outre compatible avec les matériaux utilisés pour former les différentes couches.

Avantageusement, ladite étape de superposition de ladite cinquième couche de végétation implantée est réalisée par un semis, de préférence par le placement de boutures, préférentiellement par le placement de mini-mottes enracinées.

De préférence, selon la présente invention, la soudure étanche assurant l'étanchéité dudit système pour former un élément textile végétalisé est réalisée par soudure à hautes fréquences ou par soudure à air chaud ou par soudure au laser ou par soudure à lame chauffante ou par soudure à miroir chauffant ou encore par tout autre type de soudure permettant de souder entre eux les différents polymères constituant les différentes couches, lesdits polymères des différentes couches étant choisis en fonction de leur aptitude à fusionner lors de la soudure.

D'autres formes de réalisation du procédé de fabrication d'un système pour former un élément textile végétalisé suivant l'invention sont indiquées dans les revendications annexées.

L'invention se rapporte en outre à une utilisation du système pour l'épuration des eaux par lagunage sur tout type de surface plane ou inclinée, concave ou convexe, et présentant des creux ou des reliefs. L'épuration des eaux peut également s'effectuer par percolation au travers des racines des végétaux du système pour former un élément textile végétalisé qui est alors placé sur une pente, par exemple, sur les versants d'une colline, les façades ou la toiture d'une habitation.

L'invention se rapporte également à une utilisation du système pour la création de surfaces végétalisées auto-portantes, planes ou courbes, concaves ou convexes, dans le domaine de l'architecture textile et des toiles tendues.

L'invention se rapporte également à une utilisation du système pour la création d'articles domestiques végétalisés tels que des tableaux végétaux, des sculptures végétales, des tapis végétalisés, des mobiliers végétalisés ou encore des vêtements végétalisés.

D'autres formes d'utilisation du système suivant l'invention sont indiquées dans les revendications annexées.

D'autres caractéristiques, détails et avantages de l'invention ressortiront de la description donnée ci-après, à titre non limitatif et en faisant référence aux dessins annexés.
La figure 1 est une vue en coupe d'un système pour former un élément textile végétalisé selon la présente invention.
La figure 2 est une vue en coupe d'un autre système pour former un élément textile végétalisé selon la présente invention.
La figure 3 est une vue en coupe d'encore un autre système pour former un élément textile végétalisé selon la présente invention.
La figure 4 est une vue en coupe d'encore un autre système pour former un élément textile végétalisé selon la présente invention.
La figure 5 est une vue en coupe d'encore un autre système pour former un élément textile végétalisé selon la présente invention.

Sur les figures, les éléments identiques ou analogues portent les mêmes références.

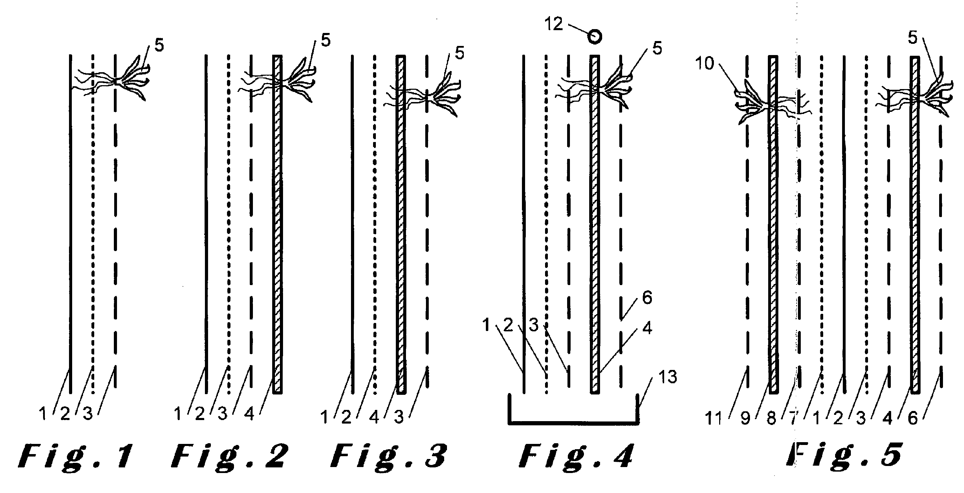

La Figure 1 illustre un mode de réalisation d'un système pour former un élément textile végétalisé selon la présente invention. La première couche 1 est une couche étanche composée d'une toile textile en polymère souple et présentant une face frontale et une face dorsale. Cette première couche 1 est directement apposée contre la surface à couvrir, cette surface pouvant présenter des creux et des reliefs, être plane ou inclinée ou être tendue sur une structure auto-portante ou fixée à la surface à recouvrir, ce qui permet la création de surfaces planes ou courbes. Une deuxième couche 2 comprenant un feutre synthétique doté d'un pouvoir de rétention d'eau et présentant une face frontale et une face dorsale est superposée sur ladite première couche 1 de telle sorte que ladite face dorsale de ladite deuxième couche 2 fait face à ladite face frontale de ladite première couche 1. Cette deuxième couche est destinée à assurer les besoins hydriques de la végétation implantée 5. Une troisième couche de polymère synthétique sous forme d'une grille 3 présentant une face frontale et une face dorsale est superposée sur ladite seconde couche 2 de telle sorte que ladite face dorsale de ladite troisième couche 3 fait face à ladite face frontale de ladite deuxième couche 2. Cette troisième couche 3 permet un enracinement correct et sécurisé de chacun des plants 5, les racines et les radicelles desdits plants 5 passant sous ladite grille 3 et pouvant s'entremêler aux mailles de polymère constituant la grille 3. Une couche comprenant la végétation implantée 5 et présentant une face frontale et une face dorsale est superposée sur ladite troisième couche de polymère synthétique sous forme d'une grille 3 de telle sorte que ladite face dorsale de ladite cinquième couche 5 fait face à ladite face frontale de ladite troisième couche 3. Afin d'assurer l'étanchéité du système pour former un élément textile végétalisé selon la présente invention, lesdites première et troisième couches sont soudées entre elles sur leurs pourtours par une soudure étanche assurant l'étanchéité dudit système pour former un élément textile végétalisé, ladite soudure étanche étant en outre compatible avec les matériaux utilisés pour former les différentes couches.

La Figure 2 illustre un autre mode de réalisation d'un système pour former un élément textile végétalisé selon la présente invention et est identique à la Figure 1 mais illustre en outre une quatrième couche 4 comprenant un substrat d'enracinement compatible avec la culture hors-sol et présentant une face frontale et une face dorsale. Cette quatrième couche 4 est superposée sur ladite troisième couche 3 de telle sorte que ladite face dorsale de ladite quatrième couche 4 fait face à ladite face frontale de ladite troisième couche de polymère synthétique sous forme d'une grille 3.

La Figure 3 illustre un autre mode de réalisation d'un système pour former un élément textile végétalisé selon la présente invention et est identique à la Figure 1 mais illustre en outre une quatrième couche 4 comprenant un substrat d'enracinement compatible avec la culture hors-sol et présentant une face frontale et une face dorsale. Cette quatrième couche 4 est superposée sur ladite deuxième couche 2 de telle sorte que ladite face dorsale de ladite quatrième couche 4 fait face à ladite face frontale de ladite deuxième couche 2 comprenant un feutre synthétique et de telle sorte que ladite face frontale de ladite quatrième couche 4 fait face à ladite face dorsale de ladite troisième couche de polymère synthétique sous forme d'une grille 3.

La Figure 4 illustre encore un autre mode de réalisation d'un système pour former un élément textile végétalisé selon la présente invention et est identique à la Figure 2 mais illustre en outre une sixième couche 6 formée par une grille en polymère souple agencée pour retenir des végétaux et/ou leurs racines, présentant une face dorsale et une face frontale. Cette sixième couche 6 est superposée sur ladite cinquième couche 5 de végétation implantée de telle sorte que ladite face dorsale de ladite sixième couche 6 fait face à ladite face frontale de ladite cinquième couche 5. Afin d'assurer l'étanchéité du système pour former un mur végétal selon la présente invention, lesdites première couche 1, troisième couche 3 et sixième couche 6 sont soudées entre elles sur leurs pourtours par une soudure étanche assurant l'étanchéité dudit système pour former un élément textile végétalisé, ladite soudure étanche étant en outre compatible avec les matériaux utilisés pour former les différentes couches. Selon ce mode de réalisation, le système pour former un élément textile végétalisé selon la présente invention comprend en outre un système d'arrosage 12 et une gouttière de récupération des eaux usées 13.

La Figure 5 illustre un autre mode de réalisation d'un système pour former un élément textile végétalisé selon la présente invention. Une couche centrale étanche composée d'une toile textile en polymère souple 1 est entourée, de part et d'autre, d'un système pour former un mur végétal tel qu'illustré à la figure 3. Selon ce mode de réalisation, le système pour former un élément textile végétalisé comprend onze couches distinctes, les couches 2 et 7 étant identiques et comprenant un feutre synthétique doté d'un pouvoir de rétention d'eau et présentant une face frontale et une face dorsale, les couches de polymère synthétique sous forme d'une grille 3 et 8 étant identiques et présentant une face frontale et une face dorsale, les couches 4 et 9 étant identiques et comprenant un substrat d'enracinement compatible avec la culture hors-sol et présentant une face frontale et une face dorsale, les couches 5 et 10 de végétation implantée étant identiques et présentant une face frontale et une face dorsale, les couches 6 et 11 formées par une grille en polymère souple agencée pour retenir des végétaux et/ou leurs racines étant identiques et présentant une face frontale et une face dorsale. Ce mode de réalisation permet la mise en place d'un système pour former un élément textile végétalisé double-face.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Système pour former un élément textile végétalisé comprenant une première couche imperméable présentant une face dorsale et une face frontale, une deuxième couche comprenant un feutre synthétique doté d'un pouvoir de rétention d'eau et présentant une face dorsale et une face frontale, ladite face dorsale de ladite deuxième couche faisant face à ladite face frontale de ladite première couche imperméable et une troisième couche de polymère synthétique présentant des ouvertures ainsi qu'une face dorsale et une face frontale, ladite face dorsale de ladite troisième couche faisant face à ladite face frontale de ladite seconde couche comprenant un feutre synthétique,
**caractérisé en ce que** ladite première couche imperméable est une toile souple en polymère présentant une densité comprise entre 300 et 1200 g/m², de préférence entre 500 et 1000 g/m², préférentiellement entre 600 et 800 g/m² et **en ce que** ladite troisième couche est une grille en polymère souple, lesdites première et troisième couches étant soudées entre elles sur leur pourtour afin d'assurer l'étanchéité dudit système pour former un élément textile végétalisé, ladite soudure étanche étant compatible avec les matériaux utilisés pour former les différentes couches.

2. Système pour former un élément textile végétalisé selon la revendication 1, **caractérisé en ce qu'**il comprend en outre une quatrième couche comprenant un substrat d'enracinement compatible avec la culture hors-sol et présentant une face dorsale et une face frontale, ladite face dorsale de ladite quatrième couche faisant face à ladite face frontale de ladite troisième couche ou faisant face à ladite face frontale de ladite deuxième couche, ladite face frontale de ladite quatrième couche faisant alors face à ladite face dorsale de ladite troisième couche.

3. Système pour former un élément textile végétalisé selon la revendication 1 ou la revendication 2, **caractérisé en ce qu'**il comprend en outre une cinquième couche de végétation implantée présentant une face dorsale et une face frontale, ladite face dorsale de ladite cinquième couche faisant face à ladite face frontale de ladite troisième couche et éventuellement à ladite face frontale de ladite quatrième couche lorsqu'elle est présente.

4. Système pour former un élément textile végétalisé selon l'une des quelconques revendications 1 à 3, caractérisé en qu'il comprend en outre une sixième couche formée par une grille en polymère souple agencée pour retenir des végétaux et/ou leurs racines, présentant une face dorsale et une face frontale, ladite face dorsale de ladite sixième couche faisant face à ladite face frontale de ladite troisième couche et éventuellement à ladite face frontale de ladite quatrième couche lorsqu'elle est présente ainsi qu'éventuellement à ladite face frontale de ladite cinquième couche lorsqu'elle est présente et étant soudée au moins à ladite première couche sur son pourtour afin d'assurer l'étanchéité dudit système pour former un élément textile végétalisé, ladite soudure étanche étant compatible avec les matériaux utilisés pour former les différentes couches.

5. Système pour former un élément textile végétalisé selon l'une des quelconques revendications 1 à 4, **caractérisé en ce qu'**il comprend en outre une septième couche comprenant un feutre synthétique doté d'un pouvoir de rétention d'eau et présentant une face dorsale et une face frontale, **en ce que** ladite face dorsale de ladite première couche imperméable fait face à ladite face frontale de ladite septième couche, et une huitième couche de polymère synthétique présentant des ouvertures et une face dorsale et une face frontale, ladite face dorsale de ladite septième couche faisant face à ladite face frontale de ladite huitième couche.

6. Système pour former un élément textile végétalisé selon la revendication 5, **caractérisé en ce qu'**il comprend en outre une neuvième couche comprenant un substrat d'enracinement compatible avec la culture hors-sol et présentant une face dorsale et une face frontale, ladite face frontale de ladite neuvième couche faisant face à ladite face dorsale de ladite huitième couche.

7. Système pour former un élément textile végétalisé selon les revendications 5 et 6, **caractérisé en ce qu'**il comprend en outre une dixième couche de végétation implantée présentant une face dorsale et une face frontale, ladite face frontale de ladite dixième couche faisant face à ladite face dorsale de ladite huitième couche et éventuellement à ladite face dorsale de ladite neuvième couche lorsqu'elle est présente.

8. Système pour former un élément textile végétalisé selon l'une des quelconques revendications 5 à 7, **caractérisé en ce qu'**il comprend en outre une onzième couche formée par une grille en polymère souple agencée pour retenir des végétaux et/ou leurs racines et présentant une face dorsale et une face frontale, ladite face frontale de ladite onzième couche faisant face à ladite face dorsale de ladite huitième couche et éventuellement à ladite face dorsale de ladite neuvième couche lorsqu'elle est présente ainsi qu'éventuellement à ladite face dorsale de la dixième couche, lorsqu'elle est présente et étant soudée au moins à ladite première couche sur son pourtour afin d'assurer l'étanchéité dudit système pour former un élément textile végétalisé, ladite soudure étanche étant compatible avec les matériaux utilisés pour former les différentes couches.

9. Procédé de fabrication d'un système pour former un élément textile végétalisé comprenant
- une étape de superposition d'une deuxième couche comprenant un feutre synthétique doté d'un pouvoir de rétention d'eau et présentant une face frontale et une face dorsale sur une première couche imperméable présentant une face frontale et une face dorsale, ladite face dorsale de ladite deuxième couche faisant face à ladite face frontale de ladite première couche,
- une étape de superposition d'une troisième couche de polymère synthétique présentant des ouvertures ainsi qu'une face frontale et une face dorsale sur ladite deuxième couche, ladite face dorsale de ladite troisième couche faisant face à la face frontale de ladite deuxième couche, et
- une étape de soudure étanche sur les pourtours desdites première et troisième couches, ladite soudure étanche assurant l'étanchéité dudit système pour former un élément textile végétalisé, ladite soudure étanche étant en outre compatible avec les matériaux utilisés pour former les différentes couches.

10. Procédé de fabrication d'un système pour former un élément textile végétalisé selon la revendication 9, **caractérisé en ce qu'**il comprend une étape de superposition d'une quatrième couche comprenant un substrat d'enracinement compatible avec la culture hors-sol et présentant une face frontale et une face dorsale sur ladite-troisième couche, ladite face dorsale de ladite quatrième couche faisant face à ladite face frontale de ladite troisième couche.

11. Procédé de fabrication d'un système pour former un élément textile végétalisé selon la revendication 9 ou 10, **caractérisé en ce qu'**il comprend une étape de superposition d'une cinquième couche de végétation implantée présentant une face frontale et une face dorsale sur ladite troisième couche, ladite face dorsale de ladite cinquième couche faisant face à ladite face frontale de ladite troisième couche et éventuellement à ladite face frontale de ladite quatrième couche lorsqu'elle est présente.

12. Procédé de fabrication d'un système pour former un élément textile végétalisé selon les revendications 9 à 11, **caractérisé en ce qu'**il comprend une étape de superposition d'une sixième couche formée par une grille en polymère souple agencée pour retenir des végétaux et/ou leurs racines et présentant une face frontale et une face dorsale sur ladite troisième couche, ladite face dorsale de ladite sixième couche faisant face à ladite face frontale de ladite troisième couche et éventuellement à ladite face frontale de ladite quatrième couche lorsqu'elle est présente ainsi qu'éventuellement à ladite face frontale de ladite cinquième couche lorsqu'elle est présente et étant soudée au moins à ladite première couche sur son pourtour afin d'assurer l'étanchéité dudit système pour former un élément textile végétalisé, ladite soudure étanche étant compatible avec les matériaux utilisés pour former les différentes couches.

13. Procédé de fabrication d'un système pour former un élément textile végétalisé selon les revendications 11 et 12, **caractérisé en ce que** ladite étape de superposition d'une cinquième couche de végétation implantée est réalisée par un semis, de préférence par le placement de boutures, préférentiellement par le placement de mini-mottes enracinées.

14. Procédé de fabrication d'un système pour former un élément textile végétalisé selon les revendications 9 à 12, **caractérisé en ce que** ladite soudure est réalisée par soudure à hautes fréquences ou par soudure à air chaud ou par soudure au laser ou par soudure à lame chauffante ou par soudure à miroir chauffant ou encore par tout autre type de soudure permettant de souder entre eux les différents polymères constituant les différentes couches, lesdits polymères des différentes couches étant choisis en fonction de leur aptitude à fusionner lors de la soudure.

15. Utilisation du système selon l'une des quelconques revendications 1 à 8, pour l'épuration des eaux par lagunage sur tout type de surface plane ou inclinée et présentant des creux ou des reliefs et/ou pour la création de surfaces végétalisées auto-portantes, planes ou courbes, concaves ou convexes, dans le domaine de l'architecture textile et des toiles tendues et/ou pour la création d'articles domestiques.

## Patentansprüche

1. System zum Bilden eines begrünten Textilelements, umfassend eine erste undurchlässige Schicht, die eine Rückseite und eine Vorderseite aufweist, eine zweite Schicht, die einen synthetischen Filz aufweist, der eine Fähigkeit zur Aufnahme von Wasser besitzt und eine Rückseite und eine Vorderseite aufweist, wobei die Rückseite der zweiten Schicht der Vorderseite der ersten undurchlässigen Schicht gegenüberliegt, und eine dritte Schicht aus synthetischem Polymer, die Öffnungen sowie eine Rückseite und eine Vorderseite aufweist, wobei die Rückseite der dritten Schicht der Vorderseite der zweiten Schicht, die einen synthetischen Filz aufweist, gegenüberliegt,
**dadurch gekennzeichnet, dass** die erste undurchlässige Schicht ein flexibles Gewebe aus Polymer ist, der eine Dichte aufweist, die zwischen 300 und 1200 g/m², vorzugsweise zwischen 500 und 1000 g/m², vorzugsweise zwischen 600 und 800 g/m² beträgt, und dass die dritte Schicht ein flexibles Gitter aus Polymer ist, wobei die erste und dritte Schicht an ihrem Umfang miteinander verschweißt sind, um die Dichtheit des Systems zum Bilden eines begrünten Textilelements zu gewährleisten, wobei die dichte Verschweißung mit den Materialien kompatibel ist, die verwendet werden, um die verschiedenen Schichten zu bilden.

2. System zum Bilden eines begrünten Textilelements nach Anspruch 1, **dadurch gekennzeichnet, dass** es ferner eine vierte Schicht aufweist, die ein Verwurzelungssubstrat aufweist, das mit erdlosen Kulturen kompatibel ist, und eine Rückseite und eine Vorderseite aufweist, wobei die Rückseite der vierten Schicht der Vorderseite der dritten Schicht gegenüberliegt oder der Vorderseite der zweiten Schicht gegenüberliegt, wobei die Vorderseite der vierten Schicht dann der Rückseite der dritten Schicht gegenüberliegt.

3. System zum Bilden eines begrünten Textilelements nach Anspruch 1 oder 2, **dadurch gekennzeichnet, dass** es ferner eine fünfte Schicht der eingepflanzten Vegetation aufweist, die eine Rückseite und eine Vorderseite aufweist, wobei die Rückseite der fünften Schicht der Vorderseite der dritten Schicht und eventuell der Vorderseite der vierten Schicht gegenüberliegt, wenn sie vorhanden ist.

4. System zum Bilden eines begrünten Textilelements nach einem der Ansprüche 1 bis 3, **dadurch gekennzeichnet, dass** es ferner eine sechste Schicht aufweist, die durch ein flexibles Gitter aus Polymer gebildet ist, das angeordnet ist, um die Pflanzen und/oder ihre Wurzeln zu halten, die eine Rückseite und eine Vorderseite aufweist, wobei die Rückseite der sechsten Schicht der Vorderseite der dritten Schicht und eventuell der Vorderseite der vierten Schicht, wenn sie vorhanden ist, und eventuell der Vorderseite der fünften Schicht, wenn sie vorhanden ist, gegenüberliegt und mindestens an die erste Schicht an ihrem Umfang verschweißt ist, um die Dichtheit des Systems zum Bilden eines begrünten Textilelements zu gewährleisten, wobei die dichte Verschweißung mit den Materialien kompatibel ist, die verwendet werden, um die verschiedenen Schichten zu bilden.

5. System zum Bilden eines begrünten Textilelements nach einem der Ansprüche 1 bis 4, **dadurch gekennzeichnet, dass** es ferner eine siebte Schicht, die einen synthetischen Filz aufweist, der eine Fähigkeit zur Aufnahme von Wasser besitzt, und eine Rückseite und eine Vorderseite aufweist, dass die Rückseite der ersten undurchlässigen Schicht der Vorderseite der siebten Schicht gegenüberliegt, und eine achte Schicht aus synthetischem Polymer aufweist, die Öffnungen und eine Rückseite und eine Vorderseite aufweist, wobei die Rückseite der siebten Schicht der Vorderseite der achten Schicht gegenüberliegt.

6. System zum Bilden eines begrünten Textilelements nach Anspruch 5, **dadurch gekennzeichnet, dass** es ferner eine neunte Schicht aufweist, die ein Verwurzelungssubstrat aufweist, das mit erdlosen Kulturen kompatibel ist, und eine Rückseite und eine Vorderseite aufweist, wobei die Vorderseite der neunten Schicht der Rückseite der achten Schicht gegenüberliegt.

7. System zum Bilden eines begrünten Textilelements nach Anspruch 5 und 6, **dadurch gekennzeichnet, dass** es ferner eine zehnte Schicht der eingepflanzten Vegetation aufweist, die eine Rückseite und eine Vorderseite aufweist, wobei die Vorderseite der zehnten Schicht der Rückseite der achten Schicht und eventuell der Rückseite der neunten Schicht gegenüberliegt, wenn sie vorhanden ist.

8. System zum Bilden eines begrünten Textilelements nach einem der Ansprüche 5 bis 7, **dadurch gekennzeichnet, dass** es ferner eine elfte Schicht aufweist, die durch ein flexibles Gitter aus Polymer gebildet ist, das angeordnet ist, um die Pflanzen und/oder ihre Wurzeln zu halten, und eine Rückseite und eine Vorderseite aufweist, wobei die Vorderseite der elften Schicht der Rückseite der achten Schicht und eventuell der Rückseite der neunten Schicht, wenn sie vorhanden ist, sowie eventuell der Rückseite der zehnten Schicht, wenn sie vorhanden ist, gegenüberliegt und mindestens an die erste Schicht an ihrem Umfang verschweißt ist, um die Dichtheit des Systems zum Bilden eines begrünten Textilelements zu gewährleisten, wobei die dichte Verschweißung mit den Materialien kompatibel ist, die verwendet werden, um die verschiedenen Schichten zu bilden.

9. Verfahren zur Herstellung eines Systems zum Bilden eines begrünten Textilelements, umfassend
- einen Schritt des Überlagerns einer zweiten Schicht, die einen synthetischen Filz aufweist, der eine Fähigkeit zur Aufnahme von Wasser besitzt, und eine Vorderseite und eine Rückseite aufweist, auf eine erste undurchlässige Schicht, die eine Vorderseite und eine Rückseite aufweist, wobei die Rückseite der zweiten Schicht der Vorderseite der ersten Schicht gegenüberliegt,
- einen Schritt des Überlagerns einer dritten Schicht aus synthetischem Polymer, die Öffnungen und eine Vorderseite und eine Rückseite aufweist, auf die zweite Schicht, wobei die Rückseite der dritten Schicht der Vorderseite der zweiten Schicht gegenüberliegt, und
- einen Schritt des dichten Verschweißens der ersten und dritten Schicht an den Umfängen, wobei das dichte Verschweißen die Dichtheit des Systems zum Bilden eines begrünten Textilelements gewährleistet, wobei die dichte Verschweißung ferner mit den Materialien kompatibel ist, die verwendet werden, um die verschiedenen Schichten zu bilden.

10. Verfahren zur Herstellung eines Systems zum Bilden eines begrünten Textilelements nach Anspruch 9, **dadurch gekennzeichnet, dass** es einen Schritt des Überlagerns einer vierten Schicht aufweist, die ein Verwurzelungssubstrat aufweist, das mit der erdlosen Kultur kompatibel ist, und eine Vorderseite und eine Rückseite aufweist, auf die dritte Schicht, wobei die Rückseite der vierten Schicht der Vorderseite der dritten Schicht gegenüberliegt.

11. Verfahren zur Herstellung eines Systems zum Bilden eines begrünten Textilelements nach Anspruch 9 oder 10, **dadurch gekennzeichnet, dass** es einen Schritt des Überlagerns einer fünften Schicht der eingepflanzten Vegetation, die eine Vorderseite und eine Rückseite aufweist, auf die dritte Schichte aufweist, wobei die Rückseite der fünften Schicht der Vorderseite der dritten Schicht und eventuell der Vorderseite der vierten Schicht gegenüberliegt, wenn sie vorhanden ist.

12. Verfahren zur Herstellung eines Systems zum Bilden eines begrünten Textilelements nach den Ansprüchen 9 bis 11, **dadurch gekennzeichnet, dass** es einen Schritt des Überlagerns einer sechsten Schicht, die durch ein flexibles Gitter aus Polymer gebildet ist, das angeordnet ist, um die Pflanzen und/oder ihre Wurzeln zu halten, und eine Vorderseite und eine Rückseite aufweist, auf die dritte Schicht aufweist, wobei die Rückseite der sechsten Schicht der Vorderseite der dritten Schicht und eventuell der Vorderseite der vierten Schicht, wenn sie vorhanden ist, und eventuell der Vorderseite der fünften Schicht, wenn sie vorhanden ist, gegenüberliegt und mindestens an die erste Schicht an ihrem Umfang verschweißt ist, um die Dichtheit des Systems zum Bilden eines begrünten Textilelements zu gewährleisten, wobei die dichte Verschweißung mit den Materialien kompatibel ist, die verwendet werden, um die verschiedenen Schichten zu bilden.

13. Verfahren zur Herstellung eines Systems zum Bilden eines begrünten Textilelements nach den Ansprüchen 11 und 12, **dadurch gekennzeichnet, dass** der Schritt des Überlagerns einer fünften Schicht der eingepflanzten Vegetation durch ein Säen, vorzugsweise durch das Setzen von Stecklingen, vorzugsweise durch das Platzieren von Miniwurzelballen durchgeführt wird.

14. Verfahren zur Herstellung eines Systems zum Bilden eines begrünten Textilelements nach den Ansprüchen 9 bis 12, **dadurch gekennzeichnet, dass** das Verschweißen durch Hochfrequenzschweißen oder durch Heißluftschweißen oder durch Laserschweißen oder durch Heizschwertschweißen oder durch Heißspiegelschweißen oder durch jede andere Art von Schweißen durchgeführt wird, die es ermöglicht, die verschiedenen Polymere miteinander zu verschweißen, die die verschiedenen Schichten bilden, wobei die Polymere der verschiedenen Schichten in Abhängigkeit von ihrer Fähigkeit bei dem Verschweißen zu verschmelzen gewählt werden.

15. Verwendung des Systems nach einem der Ansprüche 1 bis 8 zur Reinigung von Wasser durch Oberflächenaufbringung auf jede Art von flacher oder geneigter Oberfläche und die Vertiefungen oder Erhöhungen aufweist, und/oder für das Erstellen von ebenen oder gekrümmten, konkaven oder konvexen, selbsttragenden begrünten Flächen im Bereich der Textilarchitektur und der gespannten Leinwände und/oder zur Schaffung von Haushaltsartikeln.

## Claims

1. A system for forming a vegetative textile element comprising a first impermeable layer having a back face and a front face, a second layer comprising a synthetic felt provided with a water retention capacity and having a back face and a front face, said back face of said second layer facing said front face of said first impermeable layer and a third layer of synthetic polymer having openings as well as a back face and a front face, said back face of said third layer facing said front face of said second layer comprising a synthetic felt,
**characterized in that** said first impermeable layer is a flexible polymer canvas have a density comprised between 300 and 1200 g/m², preferably between 500 and 1000 g/m², preferentially between 600 and 800 g/m², and **in that** said third layer is a flexible polymer grid, said first and third layers being welded to each other on their perimeter in order to ensure the sealing of said system to form a vegetative textile element, said watertight weld being compatible with the materials used to form the different layers.

2. The system for forming a vegetative textile element according to claim 1, **characterized in that** it further comprises a fourth layer comprising a root development substrate compatible with soilless cultivation and having a back face and a front face, said back face and said fourth layer facing one another at said front face of said third layer or facing said front face of said second layer, said front face of said fourth layer then facing said back face of said third layer.

3. The system for forming a vegetative textile element according to claim 1 or claim 2, **characterized in that** it further comprises a fifth layer of implanted vegetation having a back face and a front face, said back face of said fifth layer facing said front face of said third layer and optionally said front face of said fourth layer when it is present.

4. The system for forming a vegetative textile element according to any one of claims 1 to 3, **characterized in that** it further comprises a sixth layer formed by a flexible polymer grid arranged to retain plants and/or their roots, having a back face and a front face, said back face of said sixth layer facing said front face of said third layer and optionally said front face of said fourth layer when it is present, as well as, optionally, said front face of said fifth layer when it is present and being welded at least to said first layer on its perimeter by a watertight weld ensuring the water tightness of said system to form a vegetative textile element, said watertight weld being compatible with the materials used to form the different layers.

5. The system for forming a vegetative textile element according to any one of claims 1 to 4, **characterized in that** it further comprises a seventh layer comprising a synthetic felt provided with a water retention capacity and having a back face and a front face, said back face of said first impermeable layer facing said front face of said seventh layer and an eighth layer of synthetic polymer having openings as well as a back face and a front face, said back face of said seventh layer facing said front face of said eighth layer.

6. The system for forming a vegetative textile element according to claim 5, **characterized in that** it further comprises a ninth layer comprising a root development substrate compatible with soilless cultivation and having a back face and a front face, said front face of said ninth layer facing said back face of said eighth layer.

7. The system for forming a vegetative textile element according to claims 5 and 6, **characterized in that** it further comprises a tenth layer of implanted vegetation have a back face and a front face, said front face of said tenth layer facing said back face of said eighth layer and optionally said back face of said ninth layer when it is present.

8. The system for forming a vegetative textile element according to any one of claims 5 to 7, **characterized in that** it further comprises an eleventh layer formed by a flexible polymer grid arranged to retain plants and/or their roots and having a back face and a front face, said front face of said eleventh layer facing said back face of said eighth layer and optionally said back face of said ninth layer when it is present, as well as, optionally, said back face of the tenth layer, when it is present and being welded at least to the said first layer on its perimeter by a watertight weld ensuring the water tightness of said system to form a vegetative textile element, said watertight weld being compatible with the materials used to form the different layers.

9. A method for manufacturing a system to form a vegetative textile element, comprising:
- a step for superimposing a second layer comprising a synthetic felt provided with a water retention capacity and having a front face and a back face on a first impermeable layer having a front face and a back face, said back face of said second layer facing said front face of said first layer,
- a step for superimposing a third layer of synthetic polymer having openings as well as a front face and a back face on said second layer, said back face of said third layer facing the front face of said second layer, and
- a watertight welding step on the perimeters of said first and third layers, said watertight welding ensuring the water tightness of said system for forming a vegetative textile element, said watertight welding further being compatible with the materials used to form the different layers.

10. The method for manufacturing a system to form a vegetative textile element according to claim 9, **characterized in that** it comprises a step for superimposing a fourth layer comprising a root development substrate compatible with soilless cultivation and having a front face and back face on said third layer, said back face of said fourth layer facing said front face of said third layer.

11. The method for manufacturing a system to form a vegetative textile element according to claim 9 or 10, **characterized in that** it comprises a step for superimposing a fifth implanted vegetation layer having a front face and a back face on said third layer, said back face of said fifth layer facing said front face of said third layer and optionally said front face of said fourth layer when it is present.

12. The method for manufacturing a system for forming a vegetative textile element according to claims 9 to 11, **characterized in that** it comprises a step for superimposing a sixth layer formed by a flexible polymer grid arranged to retain the plants and/or their roots and having a front face and a back face on said third layer, said back face of said sixth layer facing said front face of said third layer and optionally said front face of said fourth layer when it is present, as well as, optionally, said front face of said fifth layer when it is present and being welded at least to said first layer on its perimeter by watertight welding, said watertight welding ensuring the water tightness of said system to form a vegetative textile element, said watertight welding further being compatible with the materials used to form the different layers.

13. The method for manufacturing a system for forming a vegetative textile element according to claims 11 and 12, **characterized in that** said step for superimposing said fifth layer of implanted vegetation is done by seeding, preferably by placing cuttings, preferably by placing rooted mini-clods.

14. The method for manufacturing a system for forming a vegetative textile element according to claims 9 to 12, **characterized in that** said weld is made by high-frequency welding or hot air welding or laser welding or heated blade welding or heated mirror welding or by any other type of welding making it possible to weld the different polymers making up the different layers together, said polymers of the different layers being chosen as a function of their ability to fuse during welding.

15. A use of the system according to any one of claims 1 to 8, to purify water by lagooning on any type of flat or inclined and having hollows or raised portions and/or to create self-supporting vegetative surfaces, planar or curved, concave or convex, in the field of textile architecture and stretched canvases and/or to create household vegetative items.
